# EUROPEAN PATENT SPECIFICATION

(11) **EP 2 005 070 B1**
(45) Date of publication and mention of the grant of the patent: **11.03.2020**
(21) Application number: 07715916.8
(22) Date of filing: 12.03.2007
(51) Int. Cl.: F24F 3/16, H04N 7/04, H04N 7/088

(54) **AIR FILTRATION DEVICE AND METHOD**
APPARAT UND VERFAHREN ZUR LUFTFILTERUNG
DISPOSITIF ET PROCEDE DE FILTRATION D'AIR

(30) Priority: 14.03.2006 NL 2000025
(43) Date of publication of application: 24.12.2008
(73) Proprietor: Dreef, Frank, 1185 RJ Amstelveen (NL); Boers, Marcus Willem, 1077 XG Amsterdam (NL)
(72) Inventor: Dreef, Frank, 1185 RJ Amstelveen (NL); Boers, Marcus Willem, 1077 XG Amsterdam (NL)
(74) Representative: Hooiveld, Arjen Jan Winfried
(86) International application number: PCT/NL2007/050098
(87) International publication number: WO 2007/105948

(56) References cited:
- WO-A-2004/065856
- DE-A1- 19 652 688
- US-A- 4 370 155
- US-A- 5 240 478
- US-A- 5 616 172
- US-A- 5 904 896
- US-A- 5 997 619

## Description

The invention relates to a room comprising an air filtration device for filtering contaminated air in a room that is accessible to persons, which device comprises a housing provided with an air inlet and an air outlet, as well as air moving means for moving air from the air inlet to the air outlet in a direction through a filter element. The invention further relates to an air filtration method for filtering contaminated air in a room that is accessible to persons, wherein contaminated air is moved from an air inlet, through a filter element, to an air outlet. The invention is in particular aimed at filtering air contaminated by cigarette and/or cigar smoke in catering establishments such as cafés, restaurants, discotheques and the like, in short, places where smoking is allowed.

Such a room comprising an air filtration device and method are generally known. In many countries it is legally prohibited for health reasons to smoke cigarettes and cigars in public places, although in some countries such a smoking ban does not apply in particular to catering establishments, such as cafés and restaurants. However, breathing cigarette and cigar smoke for prolonged periods of time during working hours constitutes a health hazard for people who work in the catering industry. Consequently, some countries are preparing legislation to prohibit the smoking of cigarettes and cigars in catering establishments as well.

United States patent number 5,240,478 describes a self-contained, portable air purification device designed to continuously cleanse airborne particulates which include infectious respiratory organism such as tuberculosis bacilla.

United States patent number 5, 616, 172 describes a self contained air movement system for air purification and infection control including an elongated upright enclosed housing including a base module, sidewalls, and an upper module.

The object of the invention is to provide a room comprising an air filtration device and method for filtering air, in particular air contaminated by cigarette and/or cigar smoke in catering establishments, so that the extent to which catering personnel breathe such smoke is reduced to an acceptable minimum.

In order to accomplish that object, there is proposed, according to a first aspect of the invention, a room comprising an air filtration device as defined in claim 1. According to another aspect of the invention there is proposed an air filtration method as defined in claim 3. Preferred embodiments are defined in the dependent claims. The air filtration device operates according to the displacement principle, wherein the capacity of the air filtration device has been selected so that contaminated air present in the room is circulated X times through the filter element, said value X ranging between 25 and 88, in particular between 40 and 65, more in particular at least substantially equalling 60. Although the principle of displacement as such is well-known in the field of air ventilation, within the framework of the invention the following is furthermore noted with regard to this principle. The present air filtration device supplies filtered air to the room via the air outlet thereof in a manner which minimises the extent to which filtered air being supplied and contaminated air present in the room are mixed. This is realised by supplying filtered air to the room at a low velocity via the air outlet in a lower part of the room whilst simultaneously exhausting contaminated air via the air inlet in a higher part of the room. The aforesaid low velocity varies from 0.075 m/s to 0.35 m/s. Preferably said velocity will vary from 0.15 m/s to 0.35 m/s in case of a horizontal direction of flow of the filtered air and from 0.075 m/s to 0.2 m/s in case of a vertical direction of flow thereof. The density of the filtered air in the aforesaid lower part will be higher than the density of the contaminated air in the aforesaid higher part, so that contaminated air is forced upwards by convection. This displacement effect is further enhanced by the difference in air pressure caused by the high recirculation ratio effected by the displacement means. Tests have surprisingly shown that the above-indicated circulation rate (viz. X times per hour, said value X ranging between 25 and 88, in particular between 40 and 65, more in particular at least substantially equalling 60) on the one hand results in a high air quality as regards the absence of smoke particles and on the other hand does not lead to air flows (draught) that are objectionable to persons present in the room.

According to the invention, the air inlet is mounted near a ceiling of the room and the air outlet is mounted near a floor of the room. As already explained above, an optimum air displacement is realised in this way, with the boundary between filtered air being supplied and contaminated air present in the room preferably being present at a height of 1.80 from the floor of the room. As a result, guests of the catering establishment and catering personnel (for example attendant staff, such as waiters) will breathe relatively clean air. Important is that the circulation of air in the room in principle takes place without air from outside the room being mixed therewith, so that the present air filtration device consumes comparatively little energy. If the air outlet is mounted near the floor of the room, a horizontal or a vertical flow of the filtered air is effected. In another preferred variant, an air outlet is mounted near the ceiling of the room, so that a vertical air flow is effected.

In another preferred embodiment of the room comprising an air filtration device according to the invention, the filter element comprises an active carbon filter. Preferably, the filter element comprises an active carbon filter in combination with one or more other filters, all of which are in particular configured as plate filters.

As already said before, the invention also relates to a method for filtering contaminated air in a room that is accessible to persons, wherein contaminated air is moved from an air inlet, through a filter element, to an air outlet, characterised in that contaminated air present in the room is circulated X times through the filter element, said value X ranging between 25 and 88, in particular between 40 and 65, more in particular at least substantially equalling 60, and wherein filtered air is supplied to the room on the basis of the displacement principle. According to this aspect of the invention, contaminated air is supplied to the air inlet near a ceiling of the room and filtered air is supplied to the room via the air outlet near the floor of the room.

In a preferred embodiment of an air filtration method according to the invention, contaminated air present in the room is circulated through the filter element at least substantially without being mixed with air from outside the room.

The invention will now be explained in more detail with reference to figures illustrated in the drawing, in which
- Figure 1 schematically shows the constructional components of a preferred variant of a room comprising an air filtration device according to the invention; and
- Figure 2 schematically shows the air flows in a cafe in which the contaminated air is filtered by two air filtration devices shown in figure 1.

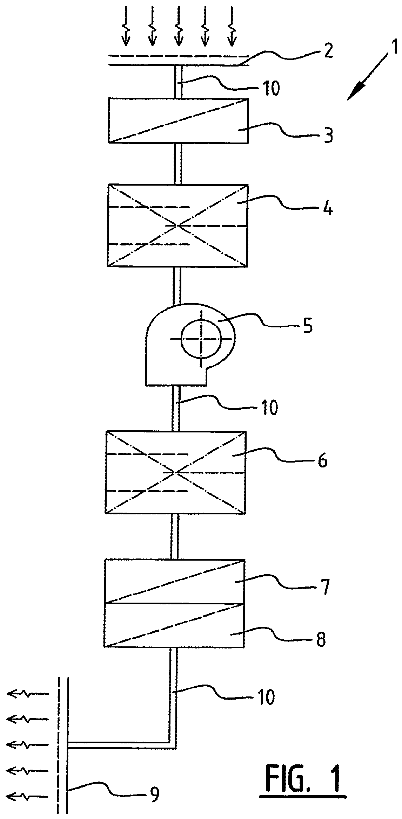

Figure 1 shows a compact air filtration device 1 according to the invention, which is mounted at a decentral location in a room, for example, a café. Said device successively comprises (from top to bottom) an air inlet 2 mounted near a ceiling of the cafe, a prefilter 3, a first sound absorber 4, a fan 5, an optional second sound absorber 6, a high efficiency dust filter 7, an active carbon filter 8 and an air outlet 9 mounted near a floor of the cafe. These constructional components of the air filtration device 1 form separate units and are interconnected by means of an air line 10.

Near the ceiling of the cafe, air contaminated by cigarette and cigar smoke is drawn in by the fan 5 via the air inlet 2. The fan 5 first passes said contaminated air through the prefilter 3, which is configured as a plate filter, i.e. a frame provided with a synthetic fibre mat. The prefilter 3 functions to collect coarse dust and the like and thus protect other components of the air filtration device 1. The efficiency of the prefilter 3 ranges between G3 and G4 according to the CEN EN 779 standard. The contaminated air then passes the high efficiency dust filter 7 (filter class H10 according to the EN 1822 standard) and subsequently the active carbon filter 8. The two filters 7,8 are likewise configured as plate filters. Finally, the air thus filtered is blown into the cafe in horizontal direction via the air outlet 9.

The capacity of the fan 5, the effective diameters of the air inlet 2, the air outlet 9 and the air line 10, the capacities of the filters 3,7,8 and the sound absorbers 4,6 have been preselected separately and in conjunction with each other such that contaminated air present in the café is filtered 60 times per hour in this specific case.

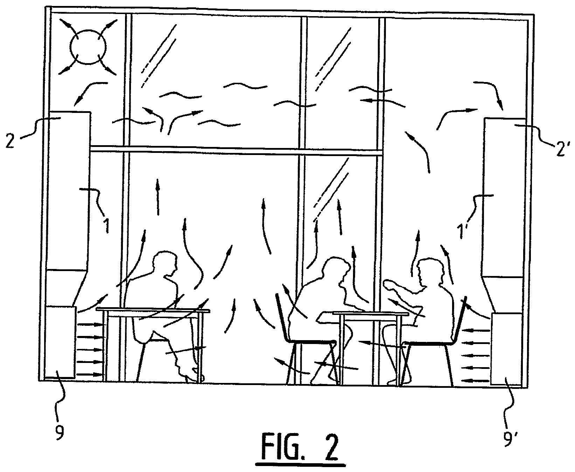

Figure 2 schematically shows a cafe in which two air filtration devices 1,1' of the type as shown in figure 1 are disposed. Each air filtration device 1,1' supplies filtered air in horizontal direction to the café at a low velocity via their respective air outlets 9,9' near the floor. As figure 2 shows, contaminated air is simultaneously exhausted from the cafe via the respective air inlets 2,2' near the ceiling. The density of the filtered air in the area near the floor is higher than the density of the contaminated air near the ceiling, so that contaminated air is forced upwards by convection. This displacement effect is further enhanced by the difference in air pressure caused by the high circulation ratio effected by the fan 5. The above-indicated circulation rate (viz. 60 times per hour) on the one hand results in a high air quality as regards the absence of small particles, whilst on the other hand it does not lead to air flows that are objectionable to persons present in the room.

The invention is not limited to the embodiment as shown herein, but it also extends to other preferred variants that fall within the scope of the appended claims.

## Claims

1. A room, comprising an air filtration device (1) for filtering contaminated air in the room, the room being accessible to persons, which device (1) comprises a housing provided with an air inlet (2) and an air outlet (9), as well as air moving means (5) for moving air from the air inlet (2) to the air outlet (9) in a direction through a filter element (8), **characterised in that** the air filtration device (1) operates according to the displacement principle, wherein the capacity of the air filtration device (1) has been selected so that contaminated air present in the room is circulated X times per hour through the filter element (8), said value X ranging between 25 and 88, in particular between 40 and 65, more in particular at least substantially equaling 60, wherein the air inlet (2) is mounted near a ceiling of the room, wherein the air outlet (9) is mounted near a floor of the room, and wherein said air filtration device (1) is arranged to supply filtered air to the room via the air outlet (9) at a low velocity from 0.075 m/s to 0.35 m/s in order to prevent mixing of contaminated air with filtered air supplied from the air outlet, such that a density of the filtered air supplied from the air outlet in a lower part of the room is higher than a density of the contaminated air in a higher part of the room in order to force the contaminated air upwards.

2. A room according to claim 1, wherein the filter element (8) comprises an active carbon filter.

3. An air filtration method for filtering contaminated air in a room that is accessible to persons, wherein contaminated air is moved from an air inlet (2), through a filter element (8), to an air outlet (9), **characterised in that** contaminated air present in the room is circulated X times per hour through the filter element (8), said value X ranging between 25 and 88, in particular between 40 and 65, more in particular at least substantially equaling 60, and wherein filtered air is supplied to the room on the basis of the displacement principle, wherein contaminated air is supplied to the air inlet (2) near a ceiling of the room, and wherein filtered air is supplied to the room via the air outlet (9) near the floor of the room at a low velocity from 0.075 m/s to 0.35 m/s in order to prevent mixing of contaminated air with filtered air supplied from the air outlet, such that a density of the filtered air in a lower part of the room is higher than a density of the contaminated air in a higher part of the room in order to force the contaminated air upwards.

4. An air filtration method according to claim 3, wherein contaminated air present in the room is circulated through the filter element at least substantially without being mixed with air from outside the room.

## Patentansprüche

1. Raum, der eine Luftfilterungsvorrichtung (1) zum Filtern von verunreinigter Luft in dem Raum aufweist, wobei der Raum für Personen zugänglich ist, wobei die Vorrichtung (1) ein Gehäuse, das mit einem Lufteinlass (2) und einem Luftauslass (9) versehen ist, ebenso wie eine Luftbewegungseinrichtung (5) zum Bewegen von Luft von dem Lufteinlass (2) zu dem Luftauslass (9) in eine Richtung durch ein Filterelement (8) aufweist,
**dadurch gekennzeichnet, dass** die Luftfilterungsvorrichtung (1) gemäß dem Verdrängerprinzip arbeitet, wobei die Kapazität der Luftfilterungsvorrichtung (1) derart ausgewählt wird, dass in dem Raum vorhandene verunreinigte Luft X Mal pro Stunde durch das Filterelement (8) zirkuliert wird, wobei der Wert X zwischen 25 und 88, vornehmlich zwischen 40 und 65, insbesondere wenigstens im Wesentlichen bei gleich 60, liegt, wobei der Lufteinlass (2) nahe einer Decke des Raums montiert ist, wobei der Luftauslass (9) nahe einem Boden des Raums montiert ist, und wobei die Luftfilterungsvorrichtung (1) derart angeordnet ist, dass sie über den Luftauslass (9) mit einer geringen Geschwindigkeit von 0,075 m/s bis 0,35 m/s gefilterte Luft an den Raum zuführt, um das Vermischen verunreinigter Luft mit von dem Luftauslass zugeführter gefilterter Luft zu verhindern, so dass eine Dichte der gefilterten Luft, die von dem Luftauslass zugeführt wird, in einem unteren Teil des Raums höher als eine Dichte der verunreinigten Luft in einem höheren Teil des Raums ist, um die verunreinigte Luft nach oben zu zwingen.

2. Raum nach Anspruch 1, wobei das Filterelement (8) ein Aktivkohlefilter aufweist.

3. Luftfilterungsverfahren zum Filtern von verunreinigter Luft in einem Raum, der für Personen zugänglich ist, wobei verunreinigte Luft von einem Lufteinlass (2) durch ein Filterelement (8) zu einem Luftauslass (9) bewegt wird, **dadurch gekennzeichnet, dass** in dem Raum vorhandene verunreinigte Luft X Mal pro Stunde durch das Filterelement (8) zirkuliert wird, wobei der Wert X zwischen 25 und 88, vornehmlich zwischen 40 und 65, insbesondere wenigstens im Wesentlichen bei gleich 60, liegt, und wobei gefilterte Luft auf der Basis des Verdrängerprinzips an den Raum zugeführt wird, wobei verunreinigte Luft an den Lufteinlass (2) nahe einer Decke des Raums zugeführt wird, und wobei gefilterte Luft über den Luftauslass (9) nahe des Bodens des Raums mit einer geringen Geschwindigkeit von 0,075 m/s bis 0,35 m/s an den Raum zugeführt wird, um das Vermischen verunreinigter Luft mit von dem Luftauslass zugeführter gefilterter Luft zu verhindern, so dass eine Dichte der gefilterten Luft in einem unteren Teil des Raums höher als eine Dichte der verunreinigten Luft in einem höheren Teil des Raums ist, um die verunreinigte Luft nach oben zu zwingen.

4. Luftfilterungsverfahren nach Anspruch 3, wobei in dem Raum vorhandene verunreinigte Luft durch das Filterelement zumindest im Wesentlichen, ohne mit Luft von außerhalb des Raums vermischt zu werden, zirkuliert wird.

## Revendications

1. Salle, comprenant un dispositif de filtration d'air (1) destiné à filtrer l'air contaminé dans la salle, la salle étant accessible à des personnes, ledit dispositif (1) comprend un logement comportant une entrée d'air (2) et une sortie d'air (9), de même que des moyens de déplacement d'air (5) destinés à déplacer de l'air à partir de l'entrée d'air (2) vers la sortie d'air (9) suivant une certaine direction à travers un élément filtrant (8), **caractérisée en ce que** le dispositif de filtration d'air (1) fonctionne selon le principe par déplacement, dans laquelle la capacité du dispositif de filtration d'air (1) a été sélectionnée de telle sorte que de l'air contaminé présent dans la salle est mis en circulation X fois par heure à travers l'élément filtrant (8), ladite valeur X étant comprise entre 25 et 88, en particulier, entre 40 et 65, plus particulièrement, au moins sensiblement égale à 60, dans laquelle l'entrée d'air (2) est montée à proximité d'un plafond de la salle, dans laquelle la sortie d'air (9) est montée à proximité d'un plancher de la salle, et dans laquelle ledit dispositif de filtration d'air (1) est agencé de manière à délivrer de l'air filtré dans la salle par l'intermédiaire de la sortie d'air (9) à une vitesse faible comprise entre 0,075 m/s et 0,35 m/s dans le but d'empêcher le mélange de l'air contaminé à l'air filtré délivré à partir de la sortie d'air, de telle sorte qu'une densité de l'air filtré délivré à partir de la sortie d'air dans une partie basse de la salle est supérieure à une densité d'air contaminé dans une partie plus élevée de la salle dans le but de forcer l'air contaminé vers le haut.

2. Salle selon la revendication 1, dans laquelle l'élément filtrant (8) comprend un filtre à carbone actif.

3. Procédé de filtration d'air destiné à filtrer de l'air contaminé dans une salle qui est accessible à des personnes, dans lequel de l'air contaminé est déplacé à partir d'une entrée d'air (2), à travers un élément filtrant (8), vers une sortie d'air (9), **caractérisé en ce que** l'air contaminé présent dans la salle est mis en circulation X fois par heure à travers l'élément filtrant (8), ladite valeur X étant comprise entre 25 et 88, en particulier, entre 40 et 65, plus particulièrement, au moins sensiblement égale à 60, et dans lequel de l'air filtré est délivré à la salle sur la base du principe par déplacement, dans lequel de l'air contaminé est délivré à l'entrée d'air (2) à proximité d'un plafond de la salle, et dans lequel de l'air filtré est délivré à la salle par l'intermédiaire de la sortie d'air (9) à proximité du plancher de la salle à une vitesse faible comprise entre 0,075 m/s et 0,35 m/s dans le but d'empêcher le mélange de l'air contaminé à de l'air filtré délivré à partir de la sortie d'air, de telle sorte qu'une densité de l'air filtré dans une partie basse de la salle est supérieure à une densité d'air contaminé dans une partie plus élevée de la salle dans le but de forcer l'air contaminé vers le haut.

4. Procédé de filtration d'air selon la revendication 3, dans lequel l'air contaminé présent dans la salle est mis en circulation à travers l'élément filtrant sans être au moins sensiblement mélangé à de l'air provenant de l'extérieur de la salle.
